# EUROPEAN PATENT APPLICATION

(11) **EP 1 767 959 A1**
(43) Date of publication of application: **28.03.2007**
(21) Application number: 05291986.7
(22) Date of filing: 23.09.2005
(51) Int. Cl.: G01S 5/00

(54) **Global positioning system and method**

(71) Applicant: Fortuna Electronic Corp., Jhongshan District Taipei City 104 (TW)
(72) Inventor: Lin, Pin Han, Jhongshan District Taipei City 104 (TW)
(74) Representative: Bentz, Jean-Paul

(57) **Abstract**

A Global Positioning System (GPS) and method allows users to inquire graphic image data of significant scenic spots and landmarks, thereby enabling the users to accurately and instantly judge locations thereof. The method includes the steps of: using a GPS receiver to receive a signal from a GPS communication satellite; obtaining geographic data by computing the location of a user based on the received signal from the GPS receiver; retrieving a corresponding image data file from a geographic information system image database based on the computed geographic data, wherein the image data file includes at least one of a static picture and a moving picture to be accordingly displayed by an output unit. In addition, the system can also allow the users to increase at will self-created graphic image data and the longitude and latitude coordinates of a geographic location.

## Description

### FIELD OF THE INVENTION

The present invention relates to global positioning systems and methods, and more particularly, to a global positioning system and method capable of displaying on the spot the graphic image data according to the location of a user.

### BACKGROUND OF THE INVENTION

Since the accession of the Global Positioning System (GPS) for popular position-locating purposes by the United States, the GPS technology integrating the universe satellite and communication technology has prospered in the consumer market. Besides its superior characteristics of the specific positioning function, the GPS technology is also capable of providing accurate information with respect to velocity, time, direction and distance. As such, the GPS technology has rapidly developed and is widely used and applied to a variety of fields besides the primary military applications. For example, in the ground transport such as the railway transportation, the GPS technology is adapted for positioning and controlling operations of trains to prevent trains from colliding with each other and further increase the system transportation capacity and efficiency. In the automobile navigation, GPS is used to provide vehicle drivers with an automatic navigation function for locating the shortest route to a destination. In air transport, the positioning and navigation functions of the GPS technology are used to assist and facilitate the automatic navigation system of the airplanes during landing and flying.

Due to the rapid development of the GPS technology, GPS receiver is more advanced with smaller volume, less power consumption and less processing time required for executing an initial positioning and reduced prices. The foregoing advantages enable the GPS to integrate with other portable computing systems such as a PDA and a mobile phone to increase its popularity and practicality. The significance of GPS technology becomes even higher particularly after the U.S. Federal Communication Committee has required that all mobile phones be equipped with GPS functionality after year 2001, for allowing 911 emergency calls to report back with precise locations for emergency rescues and aids purposes.

However, single and independent GPS receivers mostly employ longitude and latitude coordinates with GPS altitude for indication of the location, it appears difficult for the user to judge the location and even more difficult in guiding the user to a desired destination. Therefore, prior art technologies have integrated GPS with Geographical Information System (GIS) which is a map database stored in a computer for providing users with all forms of geographical information, such as using three dimensions to display and indicate topographies. Furthermore, it provides users with important geographic information such as relevant roads, scenic spots, gas stations, hospitals and the best recommended routes. Therefore, the integration of the GPS and the GIS technologies can better assist users in locating a position and reaching a destination quickly, thereby reducing the chances of users getting lost or detoured.

However, the conventional GPS technology still cannot provide users with quick and accurate judgements in determining if the location accords with the information provided by the GPS, for instance, when a GPS user is driving on one of the two overlapping highways, the topography or route information provided by the GPS could indicate the other highway that the user did not take.

Besides, for users who wish to obtain on-the-spot scenic information of a desired destination, or wish to establish a personalized geographic information system image database, conventional GPS technology cannot provide such graphic image data of the destinations or the important landmarks, scenic spots along the way, nor can it allow users to establish at will a personalized image database, thereby failing to suit the requirements of the individual users.

### SUMMARY OF THE INVENTION

In light of the drawbacks in the prior arts, a primary objective of the present invention is to provide an improved GPS and method for allowing a user to determine quickly and accurately his/her location.

Another objective of the present invention is to provide an improved GPS and method for allowing users to make inquiry by means of a geographic information system image database to view the graphic image data of destinations and/or important landmarks, scenic spots along the way, and further using an image-taking device to establish a personalized image database according to users' preferences so as to satisfy individual user needs.

In order to achieve the above and other objectives, the present invention proposes a novel Global Positioning System, the system comprises: a microprocessor; a receiver for receiving GPS satellite signals; an input unit for users to input operational signals; a memory unit for storing at least a control program, a location-calculating program, and an image inquiry program adapted for handling calculation and inquiry of the geographic information of a user's current location and/or a destination; a geographic information system map database built in the system or established in service centers of various areas connected to the system via a network unit, the map database being adapted for providing various types of the geographic information (such as 3-dimensional topographies., etc) and the required geographic information by the user (such as relevant roads, scenic spots, service stations, hospitals and stores, etc); a geographic information system image database built in the system or established in service centers of various areas connected to the system via a network unit, the image database being adapted for providing various types of image data of important landmark and scenic spots (including motion pictures and static pictures information etc.); and an output unit (such as a liquid crystal display unit, a speaker, and an amplifier, etc), wherein when the system obtains the position coordinates of the user's current location and/or a destination, the system retrieves a corresponding image data file from the geographic information system map database, the geographic information system image database and/or a users' personalized image database corresponding to position coordinates, such that the required geographic information is displayed by the output device according to the retrieved image data file.

Another preferred embodiment of the Global Positioning System according to the present invention further includes: an image-taking device for recording the image data (including motion pictures and static pictures, etc.) of a user's current location, and allowing the user to establish a personalized image database for storing the image data taken by the image-taking device and the corresponding position coordinates, where a corresponding number is automatically assigned to each stored position coordinates and the image data file, such that image data file and the corresponding position coordinates are related via the assigned position coordinate number. One embodiment of the GPS may further comprise a transmission device for transmitting the user's personalized image database via a transmission equipment (such as a USB, a RS 232 serial bus, an infrared, or a Bluetooth wireless connection) to other information systems (such as PCs, PDAs, mobile phones, or other global positioning systems, etc.).

The global positioning method of the present invention is applicable to a global positioning system having a GPS receiver, an output unit, and a geographic information system image database for storing geographic data and image data files, the GPS method comprises the steps of: receiving a GPS satellite signal from the GPS receiver; obtaining a geographic data of a user's location according to the received GPS satellite signal from the GPS receiver; retrieving a corresponding image data file from the geographic information system image database, the image data file comprising at least one of a static picture and a moving picture to be displayed by the output unit.

In another embodiment, the global positioning method of the present invention further comprises the processing steps of: using an image-taking device to establish a user's personalized image database, wherein the database is used for storing image data taken by the user using the image-taking device. The image data and the corresponding position coordinates is automatically assigned with a number, where the number for the position coordinates is used as an index for referring to the corresponding image data. Users may use a transmission device to transmit the personalized image database to another information system (such as a PC, a PDA, a mobile phone or other GPS, etc.). Users may use the output unit to display the image data and position coordinates stored in the personalized image database as a personalized travel journal.

In conclusion, the global positioning system and method of the present invention is implemented by first establishing a geographic system map database and a geographic information system image database by a system provider, and receiving GPS satellite signals by a GPS receiver, the signals allow a location-calculating program stored in a memory unit of the system to calculate the position coordinates of a user's location. By the calculated position coordinates or the name of a destination input by the user, a user may retrieve a corresponding geographic information from the geographic information system map database, so as to accurately recognize his/her location, and/or find the shortest route between the user's location and a desired destination and relevant geographic information along the way (such as relevant roads, scenic spots, service stations, hospitals and stores., etc.), thereby guiding the user to reach the destination within the shortest time without getting lost and detoured. Moreover, when the user selects a diagram of a geographic information displayed on the output unit, an inquiry program stored in the memory unit will automatically retrieve a corresponding image data (including motion pictures and static pictures) from the geographic information system image database that accords with the position coordinates of the selected diagram, thereby the image data of the important landmarks and scenic spots being selected can be displayed. Furthermore, the user may use an image-taking device to establish a personalized image database to thereby create a personalized global positioning system.

### BRIEF DESCRIPTION OF THE DRAWINGS

The present invention can be more fully understood by reading the following detailed description of the preferred embodiments, with reference made to the accompanying drawings, wherein:
FIG. 1 is a block diagram showing the basic structural architecture of a global positioning system according to a first preferred embodiment of the present invention;
FIG. 2 is a block diagram showing the basic structural architecture of the global positioning system according to a second preferred embodiment of the present invention;
FIG. 3 is a schematic flowchart showing the procedural steps for carrying out a global positioning method of the present invention; and
FIG. 4 is a schematic diagram of a database system showing a geographic information system image database or a user's personalized image database according to the global positioning method of the present invention.
FIG. 5 is a schematic diagram showing table contents of a geographic information system image database or a user's personalized image database according to the global positioning method of the present invention;
FIG. 6 is a schematic flowchart showing each procedural step necessary for establishing a user's personalized image database according to the global positioning method of the present invention; and
FIG. 7 is a schematic flowchart showing each procedural step necessary for performing a geographic image inquiry function according to the global positioning method of the present invention.

### DETAILED DESCRIPTION OF THE PREFFERED EMBODIMENT

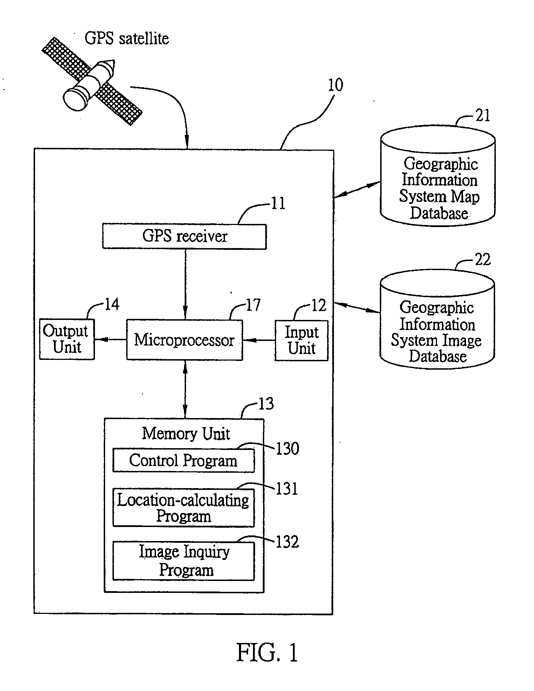

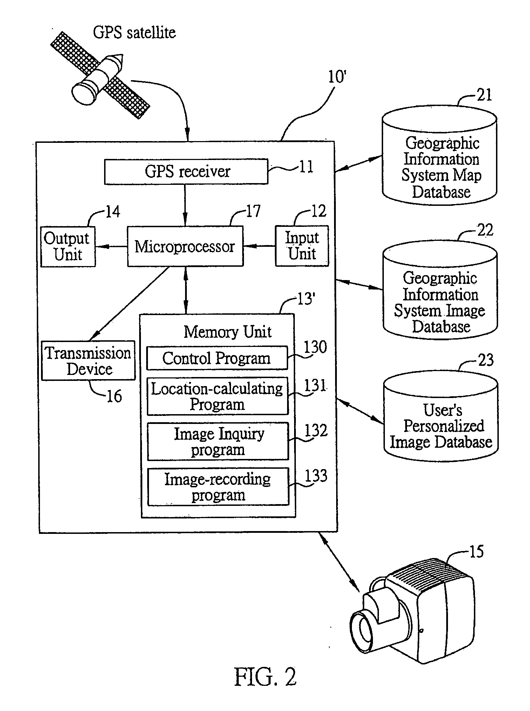

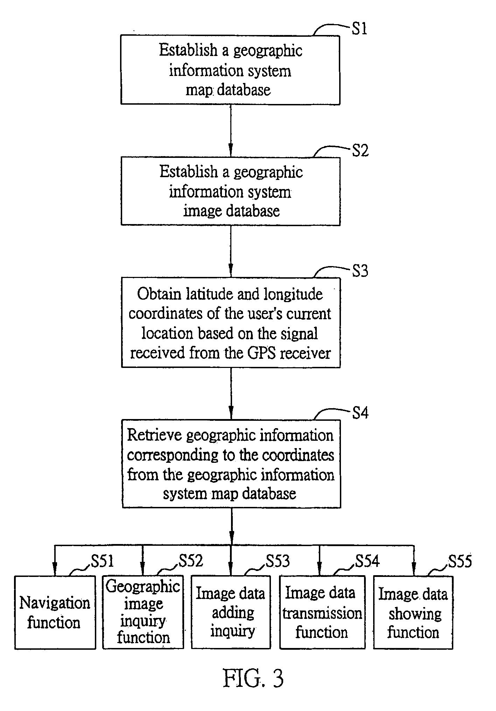

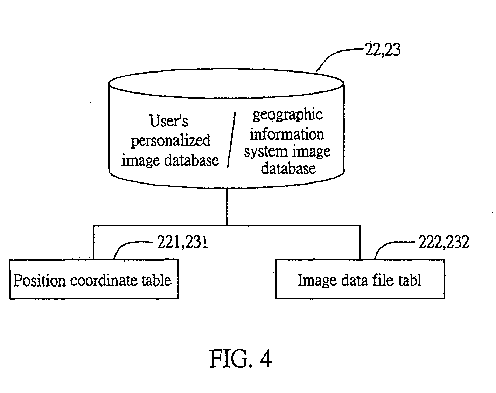

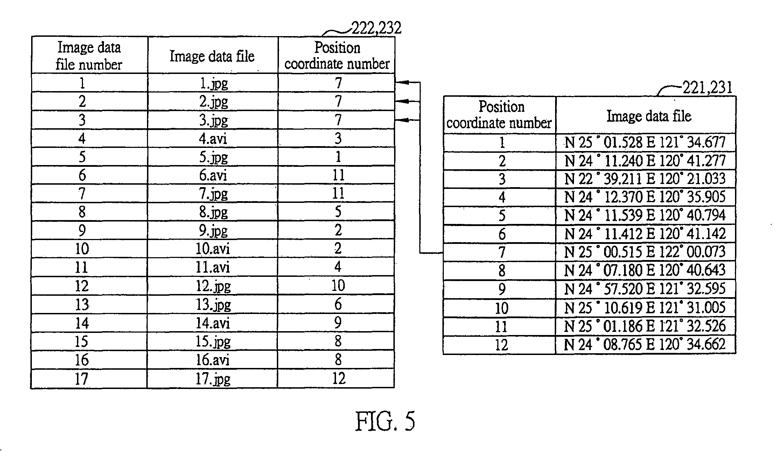

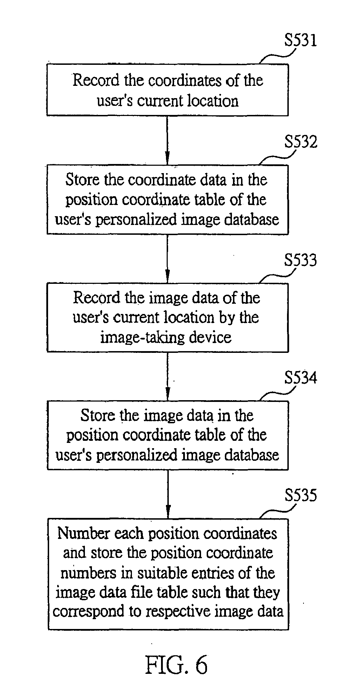

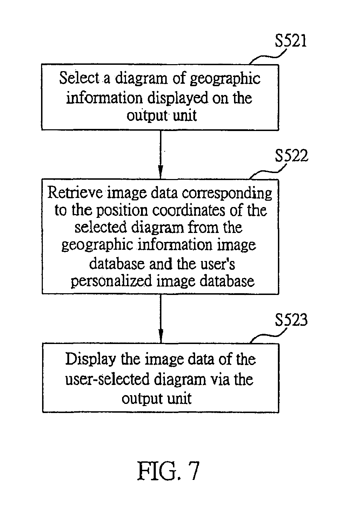

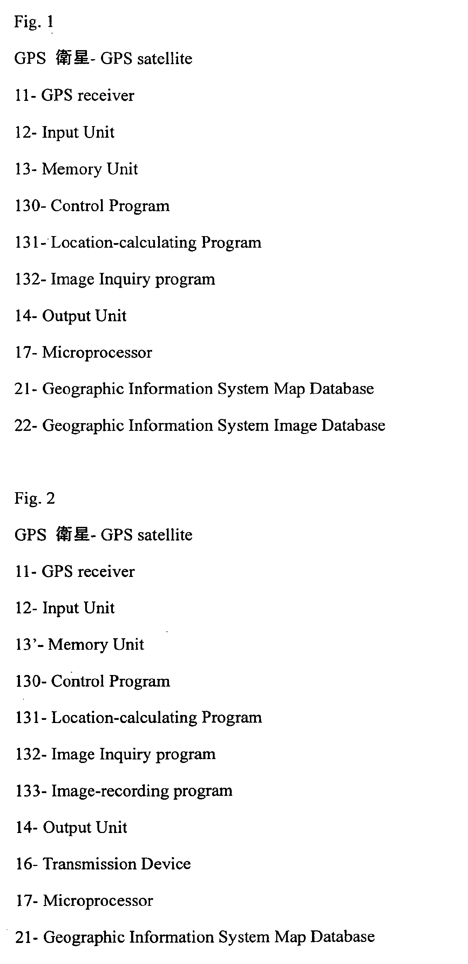

Fig. 1 shows the basic structural architecture of a global positioning system according to a first preferred embodiment of the present invention. As shown, the global positioning system 10 comprises a GPS (Global Positioning System) receiver 11, an input unit 12, a memory unit 13, an output unit 14, a microprocessor 17, a geographic information system map database 21, a geographic information system image database 22; wherein the GPS receiver 11 is equipped with a receiving antenna for receiving the GPS satellite transmission signals; said memory unit 13 is adapted for storing a control program 130, a location-computing program 131, and an image inquiry program 132.

The microprocessor 17 is a central processing unit of the global positioning system 10 electrically connected to the foregoing GPS receiver 11, the input unit 12, the memory unit 13, and the output unit 14, and is used to analyze and process GPS signals from a communication satellite received by the GPS receiver 11. After the global positioning system 10 is booted up, the microprocessor 17 performs basic booting operations for the GPS 10 according to the control program 130 stored in the memory unit 13, wherein the control program 130 provides system setting functions for a user. When the GPS receiver 11 receives the GPS satellite signals, the microprocessor 17 reads the location-computing program 131 in the memory unit 13 via a predetermined algorithm (such as triangulation) to perform calculations of coordinates of the user's current location.

The input unit 12 (such as a keyboard, a touch control panel, or a mouse, etc.) is provided for a user to make inquiries by inputting the name of a destination and select function items and diagrams of various map information, and serves as an interface between the GPS and the user. The geographic information system map database 21 is used to store the electronic map of each area for providing users with all forms of geographic information (such as 3-D topographies), and indicating from the map database the requested geographic information (such as relevant roads, scenic spots, service stations, hospitals and stores, etc.). The map database 21 can be built in the GPS 10, or installed in the computers at the service centers located at various areas and transmitted to the GPS 10 via a network unit. Further, the geographic information system image database 22 is used to store image data of important landmarks and scenic spots of all places (including motion pictures and static pictures and data, etc.), for allowing users to view the graphic images of the important landmarks and scenic spots, thereby assisting users in more accurately and effectively obtaining relevant information about a user's current location and graphic images of places along the way to a destination to rapidly locate and reach the desired destination. Similarly, the image database 22 can be built in the GPS 10, or installed in the computers at the service centers located at various areas and transmitted to the GPS 10 via a network unit.

When the microprocessor 17 of the GPS 10 receives a message transmitted from the input unit 12 and identifies the message to be a geographic location inquiry request, the microprocessor 17 reads the image inquiry program 132 from the memory unit 13 built therein and retrieves a corresponding map information and image data (including motion pictures and static pictures and data, etc.) from the geographic information system map database 21 and the image database 22, respectively, according to the coordinates of the user's current location and/or the name of a destination input by the user. Following that, the output device 14 (such as a LCD, a speaker, an amplifier, etc.) displays the retrieved map information and the image data, for allowing the user to see clearly the current location and/or a best route from the user's current location to a desired destination and the geographic information(such as relevant roads, scenic spots, service stations, hospitals and stores, etc.) and image data of the surroundings of the current location and/or the best route, thereby effectively guiding the user to reach the destination rapidly.

FIG. 2 shows the basic structural architecture of a global positioning system according to a second preferred embodiment of the present invention. In this embodiment, the connections and operations of some of the elements of the GPS 10' are substantially the same as the foregoing embodiment, which are not further detailed herein but only the parts that are different are described. Besides the foregoing elements described, this embodiment also includes an image-taking device 15, a transmission device 16 and a user's personalized image database 23.

The image-taking device 15 (such as a digital camera, a digital video camera, etc.) can be built in the GPS 10', or connected to the GPS 10' via a connecting device. When the microprocessor 17 of the GPS 10' identifies a transmitted message to be an image-taking request from the image-taking unit 15, the microprocessor 17 reads an image-recording program 133 from a memory unit 13' to record information of the coordinates of a user's current location and the image data obtained by the image-taking device 15 (including motion pictures and static picture and data, etc.) to be stored in the user's personalized image database 23.

The user's personalized image database 23 is used to store the recorded position coordinates and the image data as mentioned above. When the microprocessor 17 of the GPS 10' identifies a message sent from the input unit 12 is a request for geographic image, the memory unit 13 reads the required geographic information retrieved by the image inquiry program 132 that includes not only the map information with position coordinates and the image data, but also the user's self-constructed image data (including motion pictures and static pictures and information). By the inquiry of the user's personalized image database 23, the user is able to read the personalized image data (including motion pictures and static picture and data, etc.). Also, as the personalized image database is built according to the user's requirements and habits, it enables the user to more efficiently and quickly find the way back and the destination in future visits based on the recorded information. Furthermore, the image recording further serves as the user's travel journal for recording position coordinates and landscapes along the way.

The transmission device 16 and a transmission medium (such as a Universal Serial Bus, a RS-232 serial interface bus, an infrared connection, a Bluetooth connection etc.) together provide connections between the GPS 10' and other information systems (such as PCs, PDAs, mobile phones, or other global positioning systems, etc.), thereby allowing users to transmit the user's personalized image database 23 to other information systems for storing, displaying, or showing the image data stored therein.

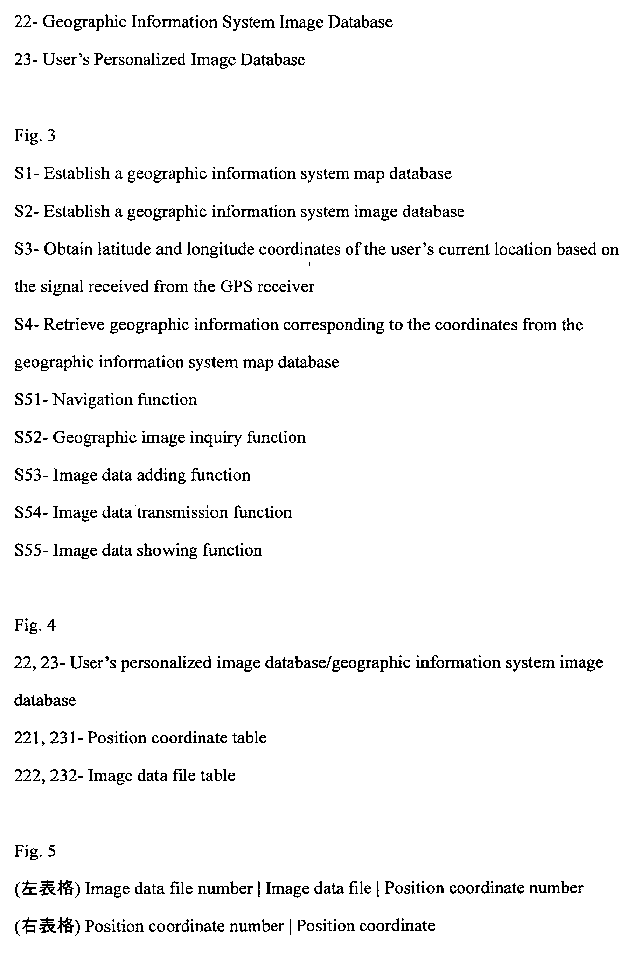

FIG. 3 is a flowchart illustrating each procedural step for implementing the GPS method of the present invention. As shown, step S 1 is performed to establish a geographic information system map database 21 for storing all forms of the geographic information (such as 3-D topographies), and also for indicating all kinds of geographic information required by users (such as the relevant roads, scenic spots, services stations, hospitals and stores, etc.), and following that, step S2 is entered.

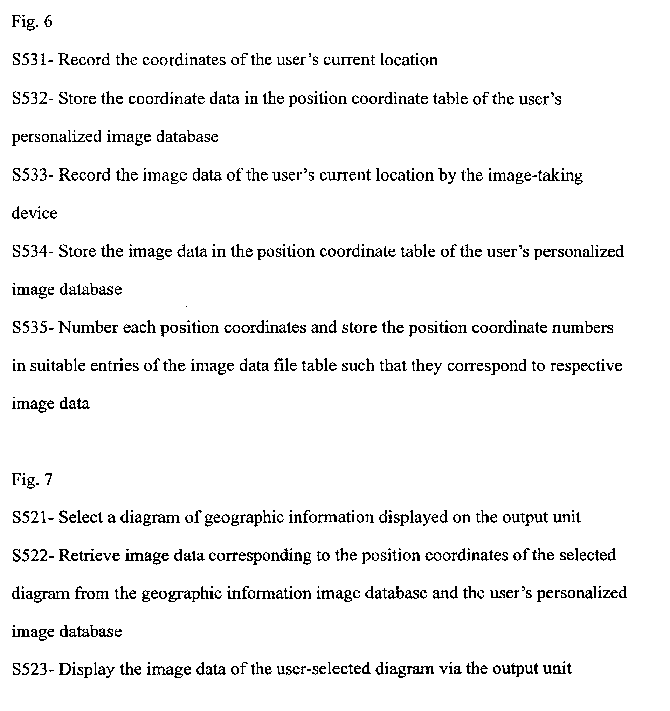

In step S2, a geographic information system image database 22 is established for storing the position coordinates and the image data (including motion pictures and static pictures and information, etc.) of the important landmarks and scenic spots, and step S3 is entered. The database system and tables of the geographic information system image database will be described later in FIG. 4 and FIG. 5.

In step S3, a GPS receiver 11 is actuated to receive the GPS satellite signals at intervals, and a microprocessor 17 is actuated to read a location-calculating program 131 from a memory unit 13 to figure out user's position coordinates by a predetermined algorithm (such as triangulation). Then, it enters into step S4.

In step S4, the microprocessor 17 is actuated to read an image inquiry program 132 from the memory unit 13 and then retrieves a matching geographic information (such as relevant roads, scenic spots, service stations, hospitals and stores, etc.) that corresponds to the position coordinates from a geographic information system map database 21, and displays the retrieved geographic information on the output unit 14 (such as a LCD, a speaker and an amplifier). Then, it enters into step S5.

In step S5, users may choose a desired function to perform via the input unit 12. For instances, if the user chooses to execute a navigation function, then step S51 is followed; alternatively, if the user chooses to perform a geographic location image inquiry function, step S52 is entered, and a detailed flowchart of the geographic location image inquiry is disclosed in FIG. 7; if the user chooses an image data adding function, step S53 is followed, and the detailed flowcharts of the image data adding function will be described later in FIG. 4, FIG. 5 and FIG. 6 respectively; if an image data transmission function is chosen, step S54 is followed; and, if an image showing function is chosen, step S55 is then followed.

In step S51, a navigation function is performed. Since the navigation functions are known in the prior art GPS systems, it is not to be further described herein.

In step S54, an image data transmission function is performed. First, the GPS system 10 is connected to an information system (such as a PC, a PDA, a mobile phone, or another global positioning system, etc.) via a transmission device 16 and a transmission medium (such as a USB, a RS-232 serial interface bus, an infrared connection, Bluetooth wireless connection, etc.), then the user's personalized image database 23 is transmitted to the other information systems (such as a PC, a PDA, a mobile phone, or another global positioning system, etc.) for storing, displaying and showing the image data (including motion pictures and static pictures and information, etc.) thereon.

In the step S55, an image-showing function is performed for allowing users via the output unit 14 (such as a LCD, a speaker, an amplifier, etc.) to locate a matching image data corresponding to the position coordinates, and show the retrieved image data (including motion pictures and static pictures and information, etc.) that is stored in the user's personalized image database 23, thereby serving as the user's travel journal.

FIG. 4 is a schematic diagram of a database system showing the geographic information system image database or the user's personalized image database according to the global positioning method of the present invention. As shown, the geographic information system image database 22 or the user's personalized image database 23 comprises the position coordinate table 221 or 231 and the image data file table 222 or 232. The detailed schematic diagram of each database system table is disclosed in FIG. 5.

FIG. 5 is a table schematic diagram of a database system showing table contents of the geographic information system image database and the user's personalized image database according to the global positioning method of the present invention. As shown, the position coordinate table 221 or 231 comprises the position coordinate numbers and position coordinates, while the image data tables 222 or 232 comprise the image data numbers, the image data, and position coordinate numbers, wherein, the coordinates position table 221 or 231 and the image data table 222 or 232 are related to each other via the position coordinate numbers. For example, if the user chooses a diagram indicating coordinates N 25° 01.186 E 121° 32.526, it can be shown from the position coordinate table 221 or 231 that the position coordinate number is 11. Further, according to the image data file table 222 or 232, it can be shown that the image data files 6.avi and 7.jpg correspond to the position coordinate number 11, thereby enabling the output unit 14 to show in order the two files of 6.avi and 7.jpg.

FIG. 6 is a schematic flowchart showing each procedural step necessary for establishing a user's personalized image database according to the global positioning method of the invention. As shown, step S531 is performed to actuate the microprocessor 17 to calculate and record the position coordinates of the user by the foregoing location-calculating program 131. Then, it enters into step S532.

In the step S532, the microprocessor 17 stores the recorded position coordinates in the position coordinate column of the coordinates position table 231 in the user's personalized image database 23, and assigns in order a corresponding number to each position coordinate and stores the assigned number in the position coordinate number column. Then, it proceeds to step S533.

In step S533, the microprocessor 17 reads the image-recording program 133 from the memory unit 13' to record the image data (including motion pictures and static pictures and information, etc.) of a user's current location, then, it proceeds to step S534.

In step S534, the microprocessor 17 stores the recorded image data (including motion pictures and static pictures and information, etc.) in the image data file column of the image data file table 232 of the user's personalized image database 23, and assigns a corresponding number to each image data file, the assigned number being stored in the image data file number column. Then, it proceeds to step S535.

In step S535, the position coordinate number in the position coordinate table 231 corresponding to the image data file is stored in the corresponding position coordinate number column of the image data file table 232. For example, the picture 12.jpg was recorded at the location of N° 25 10.619 E° 121 31.005 and from the position coordinate table 231 of FIG. 5, it can be seen that the corresponding position coordinate number is 10. Accordingly, the microprocessor 17 automatically stores "10" in the position coordinate number column that corresponds to the image data file 12.jpg in the image data file table 232.

FIG. 7 is a schematic flowchart showing each procedural step necessary for carrying out an inquiry function for the geographic image according to the global positioning method of the invention. As shown in the diagram, step S521 is performed for the user to choose a diagram of geographic information displayed on the output unit 14 and then proceeds to step S522.

In the step S522, the microprocessor 17 reads the image inquiry program 132 from the memory unit 13, and, according to the position coordinates of the diagram chosen by the user, retrieves an image data (including motion pictures and static pictures and information, etc.) corresponding to the position coordinates of the diagram from the geographic information system image database 22 and/or the user's personalized image database 23. Then, it proceeds to step S523.

In the step S523, the output unit 14 displays the image data (including motion pictures and static pictures and information, etc.) retrieved from the foregoing steps.

In conclusion, the global positioning system and method in the present invention not only can provide users with the image data of important landmarks and scenic spots of all places (including motion pictures and static pictures and information, etc.), but also allow the user to have personalized image data (including motion pictures and static pictures, etc.), thereby overcoming the drawbacks of the prior art that the GPS navigation capability is reduced for users cannot immediately and accurately judge the his/her current location based on the information provided by the conventional GPS technology. Further, it allows users to have personalized image data according to user's needs and demands to thereby enable a personalized and more dynamic global positioning system

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements. For instance, besides the image-taking device employed in the foregoing GPS, an additional audio recording device can be included; similarly, besides the geographic information system image database, the GPS can also include a geographic information system audio database for storing the audio data recorded by the audio recording device, depending on the types of the implementations being utilized.

## Claims

1. A global positioning system (GPS) for allowing a user to inquire image data of important landmarks and scenic spots at various geographic positions, comprising:
a microprocessor;
a memory unit electrically connected to the microprocessor, for storing a location-calculating program and an image inquiry program;
an output unit electrically connected to the microprocessor;
a GPS receiver electrically connected to the microprocessor, for receiving a GPS satellite communication signal, so as to allow the microprocessor to execute the location-calculating program stored in the memory unit according to the GPS satellite communication signal to obtain geographic data of the user's current location;
a geographic information system image database for storing position coordinates and image data files, wherein the image data files comprise at least one of static pictures and moving pictures, the geographic information system image database further for automatically assigning a corresponding number to each of the stored position coordinates and image data files, so as to allow the assigned position coordinate number to index position coordinates of a location to a corresponding image data file of the location; and
an input unit electrically connected to the microprocessor, for the user to input an operational signal, wherein when the microprocessor judges the operational signal as a geographic location image inquiry, the microprocessor executes the image inquiry program and the location-calculating program stored in the memory unit according to the operational signal to obtain geographic data of the user's current location, so as to retrieve a corresponding one of the image data files for the geographic data from the geographic information system image database and display the corresponding image data file by the output unit.

2. The global positioning system (GPS) of claim 1, further comprising an image-taking device and an image-recording program that is stored in the memory unit, wherein when the microprocessor judges the operational signal as a request of adding image data, the microprocessor executes the image-recording program according to the operational signal and actuates the image-taking device to take an image of a location and record image data thereof for the user.

3. The global positioning system (GPS) of claim 2, wherein a user's personalized image database is established in the geographic information system image database by means of the image-taking device, for storing the image data recorded by the image-taking device for the user and position coordinates of the location with the recorded image data, and further for automatically assigning a corresponding number to each of position coordinates and image data files stored therein, so as to index the position coordinates of the location to a corresponding image data file for the location by the assigned position coordinate number.

4. The global positioning system (GPS) of claim 1, further comprising a transmission device for allowing the user to transmit information stored in the system to other information systems.

5. The global positioning system (GPS) of claim 2, further comprising a transmission device for allowing the user to transmit information stored in the system to other information systems.

6. The global positioning system (GPS) of claim 3, further comprising a transmission device for allowing the user to transmit information stored in the system to other information systems.

7. The global positioning system (GPS) of claim 1, further comprising an audio recording device for recording audio signals.

8. The global positioning system (GPS) of claim 2, further comprising an audio recording device for recording audio signals.

9. The global positioning system (GPS) of claim 3, further comprising an audio recording device for recording audio signals.

10. The global positioning system (GPS) of claim 1, wherein the geographic information system image database is built in the GPS.

11. The global positioning system (GPS) of claim 1, wherein the geographic information system image database is built at a service center and connected to the GPS through a network unit.

12. A global positioning method applicable to a global positioning system (GPS) comprising a GPS receiver, an output unit, and a geographic information system image database for storing geographic data and image data files, so as to allow a user to inquire image data of important landmarks and scenic spots at various geographic positions, the global positioning method comprising the steps of:
receiving a GPS satellite communication signal via the GPS receiver of the global positioning system;
computing via the global positioning system geographic data of the user's current location according to the GPS satellite communication signal received by the GPS receiver; and
retrieving via the global positioning system a corresponding one of the image data files for the computed geographic data from the geographic information system image database, wherein the image data files comprise at least one of static pictures and moving pictures, so as to allow the corresponding image data file to be displayed by the output unit.

13. The global positioning method of claim 12, wherein the global positioning system further comprises an image-taking device and an image-recording program for allowing the user to record image data of a location and position coordinates of the location.

14. The global positioning method of claim 13, wherein a user's personalized image database is established in the geographic information system image database by means of the image-taking device, for storing the recorded image data and position coordinates of the location for the user, and further for automatically assigning a corresponding number to each of position coordinates and image data files stored therein, so as to index the position coordinates of the location to a corresponding image data file for the location by the assigned position coordinate number.

15. The global positioning method of claim 12, wherein the geographic information system image database comprises position coordinates and an image data file of each stored geographic location, and further automatically assigns a corresponding number to each of position coordinates and image data files stored therein, so as to index the position coordinates of the location to the image data file of the location by the assigned position coordinate number.

16. The global positioning method of claim 12, wherein the global positioning system further comprises an audio recording device for recording audio signals.

## Amended claims

### Amended claims in accordance with Rule 86(2) EPC.

**1.** A system for recording, associating, storing and retrieving global positioning system (GPS) position coordinates combined with image and/or audio data, for allowing a user to inquire image data of important landmarks and scenic spots at various geographic positions, the system comprising:
a microprocessor;
a memory unit electrically connected to the microprocessor, for storing a location-calculating program and an image inquiry program;
an output unit electrically connected to the microprocessor;
a GPS receiver electrically connected to the microprocessor, for receiving a GPS satellite communication signal, so as to allow the microprocessor to execute the location-calculating program stored in the memory unit according to the GPS satellite communication signal to obtain geographic data of the user's current location;
a geographic information system image database for storing position coordinates and image data files, wherein the image data files comprise at least one of static pictures and moving pictures, the geographic information system image database further for automatically assigning a corresponding number to each of the stored position coordinates and image data files, so as to allow the assigned position coordinate number to index position coordinates of a location to a corresponding image data file of the location; and
an input unit electrically connected to the microprocessor, for the user to input an operational signal, wherein when the microprocessor judges the operational signal as a geographic location image inquiry, the microprocessor executes the image inquiry program and the location-calculating program stored in the memory unit according to the operational signal to obtain geographic data of the user's current location, so as to retrieve a corresponding one of the image data files for the geographic data from the geographic information system image database and display the corresponding image data file by the output unit; and
an image-taking device and an image-recording program that is stored in the memory unit, wherein when the microprocessor judges the operational signal as a request of adding image data, the microprocessor executes the image-recording program according to the operational signal and actuates the image-taking device to take an image of a location and record image data thereof for the user;
wherein a user's personalized image database is established in the geographic information system image database by means of the image-taking device, for storing the image data recorded by the image-taking device for the user and position coordinates of the location with the recorded image data, and further for automatically assigning a corresponding number to each of position coordinates and image data files stored therein, so as to index the position coordinates of the location to a corresponding image data file for the location by the assigned position coordinate number.

**2.** The system of claim 1, further comprising a transmission device for allowing the user to transmit information stored in the system to other information systems.

**3.** The system of claim 1, further comprising an audio recording device for recording audio signals.

**4.** The system of claim 1, wherein the geographic information system image database is built in the GPS.

**5.** The system of claim 1, wherein the geographic information system image database is built at a service center and connected to the GPS through a network unit.

**6.** A method for recording, associating, storing and retrieving global positioning system (GPS) position coordinates combined with image and/or audio data, the method being applicable to a global positioning system (GPS) comprising a GPS receiver, an output unit, an image-taking device and an image recording program for allowing a user to record image data of a location and position coordinates of the location and a geographic information system image database for storing geographic data and image data files, so as to allow [[a]] the user to inquire image data of important landmarks and scenic spots at various geographic positions, the method comprising the steps of:
receiving a GPS satellite communication signal via the GPS receiver of the global positioning system;
computing via the global positioning system geographic data of the user's current location according to the GPS satellite communication signal received by the GPS receiver; and
retrieving via the global positioning system a corresponding one of the image data files for the computed geographic data from the geographic information system image database, wherein the image data files comprise at least one of static pictures and moving pictures, so as to allow the corresponding image data file to be displayed by the output unit.
Wherein a user's personalized image database is established in the geographic information system image database by means of the image-taking device, for storing the recorded image data and position coordinates of the location for the user, and further for automatically assigning a corresponding number to each of position coordinates and image data files stored therein, so as to index the position coordinates of the location to a corresponding image data file for the location by the assigned position coordinate number.

**7.** The method of claim 7, wherein the geographic information system image database comprises position coordinates and an image data file of each stored geographic location, and further automatically assigns a corresponding number to each of position coordinates and image data files stored therein, so as to index the position coordinates of the location to the image data file of the location by the assigned position coordinate number.

**8.** The method of claim 7, wherein the global positioning system further comprises an audio recording device for recording audio signals.
